# EUROPÄISCHE PATENTSCHRIFT

(11) **EP 1 264 716 B1**
(45) Veröffentlichungstag und Bekanntmachung des Hinweises auf die Patenterteilung: **10.06.2009**
(21) Anmeldenummer: 02006247.7
(22) Anmeldetag: 20.03.2002
(51) Int. Cl.: B60H 1/00

(54) **Verfahren zur Einstellung eines Umluftanteils der einer Fahrgastzelle zugeführten Zuluft**
Method for adjusting the proportion of recirculated air in the air supplied to a passenger compartment
Méthode pour ajuster la proportion d'air recirculé dans l'air introduit dans l'habitacle

(30) Priorität: 09.06.2001 DE 10128166
(43) Veröffentlichungstag der Anmeldung: 11.12.2002
(73) Patentinhaber: Behr GmbH & Co. KG, 70469 Stuttgart (DE)
(72) Erfinder: Britsch-Laudwein, Armin, 71272 Renningen (DE); Kampf, Hans, Dipl.-Ing., 71404 Korb (DE); Lochmahr, Karl, Dipl.-Ing., 71665 Vaihingen (DE)
(74) Vertreter: Grauel, Andreas

(56) Entgegenhaltungen:
- DE-A- 19 737 272
- DE-C- 3 726 122
- DE-C- 19 920 093
- US-A- 4 920 755

## Beschreibung

Die Erfindung betrifft ein Verfahren zum Einstellen eines Umluftanteils der einer Fahrgastzelle eines Fahrzeugs zugeführten Zuluft, gemäß Oberbegriff des Anspruchs 1, und eine Klimaanlage für ein Fahrzeug gemäß Anspruch 18.

Bei bekannten Heiz- und Kühl-/Klimaanlagen in Fahrzeugen kann der Strom der von einem Gebläse angesaugten und anschließend einer Fahrgastzelle zugeführten Zuluft durch eine Außenluft/Umluft-Einstellvorrichtung zwischen Außenluft und der in der Fahrgastzelle befindlichen Luft -häufig stufenlos- umgeschaltet werden. Dies geschieht entweder durch die Betätigung einer Taste in einem Bediengerät oder durch eine Automatik, die von der Fahrzeuggeschwindigkeit (Staudruckkompensation) und/oder von einem Signal eines Schadgassensors abhängig sein kann. Bei längerem Aufenthalt in der Fahrgastzelle besteht im Umluftmodus, bei dem die Zuluft ausschließlich aus der in der Fahrgastzelle befindlichen Luft besteht, die Gefahr, dass sich in der Fahrgastzelle ein Luftgemisch bildet, das durch den Einfluss der Insassen feucht und sauerstoffarm ist. Dies kann im Fall der Feuchtigkeit zu einem Beschlag der Fahrzeugscheiben führen oder von den Insassen als unangenehm empfunden werden. Im Fall der Sauerstoffarmut führt es zunächst zu einer schleichenden Leistungsbeeinträchtigung durch Müdigkeit und Konzentrationsschwäche. Daher wird außer in den Regionen mit tropischem Klima meist mit einem relativ hohen Außenluftanteil der Zuluft gefahren. Dadurch weist die Heiz- und Klimaanlage jedoch einen erhöhten Energiebedarf auf.

Um eine zu hohe Konzentration von Schadgasen und eine zu hohe Feuchte der Fahrgastzellenluft zu vermeiden ist es bekannt, einen hohen Außenluftanteil in der Zuluft einzustellen, ohne dass die Schadgaskonzentration und die Feuchte der Fahrgastzellenluft hierzu gemessen und dabei berücksichtigt werden. Nach diesem Prinzip arbeitende Heiz-/Klimaanlagen können zwar kostengünstig hergestellt werden, da sie keine Sensoren für die Schadgase beziehungsweise die Feuchte in der Fahrgastzellenluft benötigen, jedoch weisen sie einen relativ hohen Energieverbrauch auf, was verbesserungswürdig ist.

Aus der EP 0 825 044 A2 geht ein Verfahren zur Mischluftregelung in einem Heiz-/Klimagerät eines Kraftfahrzeugs hervor, bei dem die Feuchtigkeit der Fahrgastzellenluft mit Hilfe eines Sensors gemessen und in Abhängigkeit der Feuchte der Umluftanteil der Zuluft eingestellt wird. Ferner ist es bekannt, Gassensoren zur Ermittlung des Kohlendioxidgehalts der Fahrgastzellenluft einzusetzen. Nachteilig hierbei sind die hohen Kosten derartiger Sensoren.

Die DE 198 47 504 C1 offenbart ein Verfahren gemäß dem Oberbegriff des Anspruchs 1.

Es ist Aufgabe der Erfindung ein Verfahren der eingangs genannten Art zu schaffen, das einen einfachen und somit kostengünstigen Aufbau einer Heizund Kühl-/Klimaanlage ermöglicht.

Zur Lösung der Aufgabe wird ein Verfahren mit den Merkmalen des Anspruchs 1 vorgeschlagen. Es dient zum Einstellen eines Umluftanteils der einer Fahrgastzelle eines Fahrzeugs zugeführten Zuluft zum Zwecke der Vermeidung des Überschreitens eines vorgegebenen Grenzwertes mindestens eines Luftparameters in der Fahrgastzellenluft. Dieser Luftparameter ist beispielsweise der Kohlendioxidanteil oder die Feuchte. Das Verfahren zeichnet sich dadurch aus, dass zur indirekten Erfassung des Luftparameters Hilfsparameter ermittelt und ausgewertet werden und dass in Abhängigkeit des Auswerteergebnisses der Umluftanteil eingestellt wird. Dieser Luftparameter der Fahrgastzellenluft wird also nicht direkt mit Hilfe von Sensoren gemessen, wie bei bekannten Verfahren vorgesehen, sondern er wird aus vorgegebenen und/oder gemessenen Hilfsparameter ermittelt. Die Auswertung der Hilfsparameter zur Ermittlung des gewünschten Luftparameters erfolgt mit Hilfe einer Steuer-/Regelungseinrichtung, beispielsweise einem Mikrocomputer. Sofern der Luftparameter die Kohlendioxidkonzentration oder die Feuchte in der Fahrgastzellenluft ist, kann auf teure Sensoren zur direkten Messung dieser Parameter verzichtet werden, so dass die Kosten für eine Heiz- und Kühl-/Klimaanlage für das Fahrzeug reduziert werden können.

Erfindungsgemäß werden zumindest der Kohlendioxidanteil und die Feuchte in der Fahrgastzellenluft unter Berücksichtigung jeweils mindestens zwei der Hilfsparameter indirekt ermittelt und in Abhängigkeit dieser Werte der Fahrgastzellenluft ein vorzugsweise möglichst hoher Umluftanteil in der Zuluft eingestellt wird. Dadurch wird die Leistungsfähigkeit der Heiz- und Kühl-/Klimaanlage unterstützt, wodurch eine Reduzierung des erforderlichen Primärenergieverbrauchs zum Betreiben der Heiz-/Klimaanlage möglich ist. Ferner wird die Feuchte der Fahrgastzellenluft auf ein von den Insassen als angenehm empfundenes Niveau angehoben . Der Umluftanteil der Zuluft ist dabei aber in jedem Fall nur so hoch, dass das Auftreten von kritischen Kohlendioxidkonzentrationen in der Fahrgastzellenluft, die zu einer Ermüdung und Konzentrationsschwäche der Insassen führen können, und ein Beschlagen der Fahrzeugscheiben aufgrund einer zu hohen Luftfeuchte in der Fahrgastzelle mit Sicherheit ausgeschlossen werden können.

Vorteilhafte Ausführungsformen des Verfahrens ergeben sich aus den übrigen Unteransprüchen.

Der Gegenstand der Erfindung betrifft auch eine Heiz- und/oder Klimaanlage für ein Fahrzeug, die eine Vorrichtung zur Einstellung des Umluftanteils der einer Fahrgastzelle des Fahrzeugs zugeführten Zuluft umfasst, wobei die Vorrichtung mittels einer Steuereinrichtung gesteuert/geregelt wird und wobei die Steuereinrichtung gemäß einem Verfahren nach mindestens einem der Ansprüche 1 bis 17 arbeitet.

Vorteilhafte Ausführungsbeispiele der Heizund/oder Klimaanlage ergeben sich aus den übrigen Unteransprüchen.

Die Erfindung wird im Folgenden anhand der Zeichnung näher erläutert. Es zeigen:
- Figur 1: eine schematische Darstellung eines Ausführungsbeispiels eines Heiz-/Kühlsystems für ein Fahrzeug;
- Figur 2: ein Schaubild einer Ausführungsvariante zur Berechnung eines maximal zulässigen Umluftanteils der einer Fahrgastzelle zugeführten Zuluft aus der indirekt ermittelten Kohlendioxidkonzentration der Fahrgastzellenluft;
- Figur 3: ein Schaubild, in dem eine Ausführungsvariante zur Einstellung des Umluftanteils der Zuluft zur Unterstützung der Leistungsfähigkeit einer Heiz-/Kühleinrichtung dargestellt ist;
- Figur 4: ein Schaubild, in dem eine Ausführungsvariante zur Einstellung des Umluftanteils der Zuluft zur Vermeidung einer kritischen beziehungsweise unangenehmen Luftfeuchte in der Fahrgastzelle dargestellt ist; und
- Figur 5: ein Schaubild, in dem eine Ausführungsvariante einer Regelstruktur zur Einstellung des Umluftanteils der der Fahrgastzelle zugeführten Zuluft dargestellt ist.

Das im Folgenden beschriebene Verfahren dient zur Einstellung eines Umluftanteils der einer Fahrgastzelle eines Fahrzeugs zugeführten Zuluft, wobei der Anteil der Umluft nur so groß ist, dass ein Grenzwert von hier insgesamt zwei Luftparametern, nämlich der Kohlendioxidkonzentration und der Feuchte in der Fahrgastzellenluft nicht überschritten wird.

Die Zuluft setzt sich zusammen aus Außenluft und der Fahrgastzelle entnommener Luft, die als Umluft bezeichnet wird. Der Außen- und der Umluftanteil der Zuluft ergeben zusammen immer 100%, das heißt, wenn der Umluftanteil beispielsweise 65% der Zuluft beträgt, ergibt sich daraus ein Außenluftanteil von 35%.

Im Zusammenhang mit der hier vorliegenden Erfindung wird unter einem Fahrzeug beispielsweise ein Personenkraftwagen (Pkw) oder ein Lastkraftwagen (Lkw) verstanden. Die Fahrgastzelle ist der Teil des Innenraums des Fahrzeugs, in dem sich mindestens ein Insasse aufhalten kann.

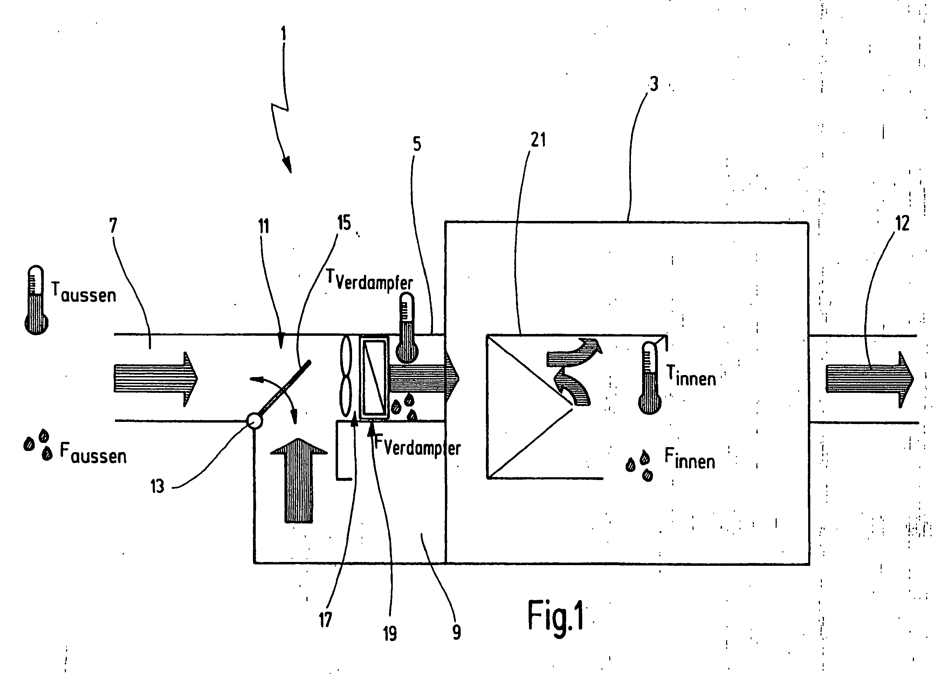

Figur 1 zeigt in schematischer Darstellung einen Ausschnitt eines Ausführungsbeispiels einer Heizund Klimaanlage 1, die einen mit einer Fahrgastzelle 3 verbundenen Luftkanal 5 aufweist, dem über einen ersten Schacht 7 Außenluft/Frischluft und über einen zweiten Schacht 9 Umluft, also der der Fahrgastzelle 3 entnommene Luft zugeführt werden kann. Die infolge einer Undichtigkeit aus der Fahrgastzelle 3 entweichende Luftströmung ist mit einem Pfeil 12 angedeutet.

Die Heiz-/Klimaanlage 1 umfasst ferner eine Vorrichtung 11 zum Einstellen des Umluftanteils der der Fahrgastzelle 3 zugeführten Zuluft, die hier eine mittels eines nicht dargestellten Stellmotors betätigbare, um eine senkrecht zur Bildebene der Figur 1 verlaufende Achse 13 schwenkbare Klappe 15 aufweist. Je nachdem in welche Stellung die Klappe 15 verschwenkt ist, desto größer beziehungsweise kleiner ist der Umluftanteil der Zuluft.

In Strömungsrichtung hinter der Klappe 15 ist ein Gebläse 17 im Luftkanal 5 angeordnet, das mittels eines nicht dargestellten Antriebs antreibbar ist. Dem Gebläse 17 ist in Strömungsrichtung ein Verdampfer 19 nachgeordnet, der Teil einer nicht dargestellten Kälteanlage ist. Dem Verdampfer 19 ist -in Richtung der Strömung der Zuluft gesehen- eine nicht dargestellte Heizeinrichtung zum Aufheizen der vom Verdampfer 19 abgekühlten Zuluft vorgesehen. Der Wärmetauscher ist vorzugsweise im Luftkanal 5 angeordnet. Die je nach Stellung der Klappe 15 aus Außenluft und/oder Umluft bestehende Zuluft gelangt vom Luftkanal 5 über mindestens eine, üblicherweise mittels Klappen, Lamellen oder dergleichen verschließbaren Öffnung 21/Düse in die Fahrgastzelle 3.

Die Ansteuerung der Antriebe für die Klappe 15 und das Gebläse 17, die Einstellung der Verdampfertemperatur T_{Verdampfer}, der Heizeinrichtung und gegebenenfalls weiterer Komponenten der Heiz- und Klimaanlage 1 erfolgt durch eine nicht dargestellte Steuereinrichtung.

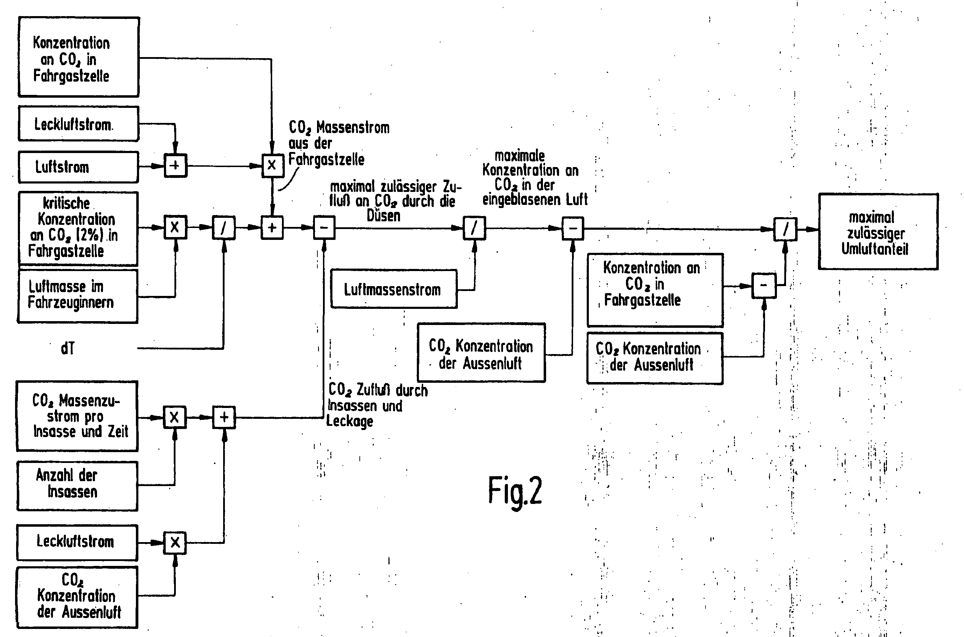

Im Folgenden wird anhand der Figuren 2 bis 4 eine Ausführungsvariante des erfindungsgemäßen Verfahrens näher beschrieben. Ziel ist es im stationären Fall, einen möglichst hohen Umluftanteil einzustellen, um die Leistungsfähigkeit der Heiz- und Klimaanlage 1 zu unterstützen, insbesondere deren Primärenergieverbrauch zu reduzieren, und/oder die Feuchte der Fahrgastzellenluft Fᵢₙₙₑₙ auf ein für einen in der Fahrgastzelle 3 befindlichen Insassen auf ein angenehmes Niveau einzustellen. Dabei soll aber gleichzeitig eine kritische Kohlendioxidkonzentration, die bei dem mindestens einen Insassen zu einer Ermüdung und Konzentrationsschwäche führen kann, und eine zu hohe Feuchte, die zu einem Beschlagen der Fahrzeugscheiben führen kann, vermieden werden. Hierzu soll jedoch weder ein Gassensor zur Ermittlung von Kohlendioxidkonzentrationen in der Luft, noch ein Sensor zur Ermittlung der Luftfeuchte eingesetzt werden.

Vorzugsweise wird zunächst ein maximal zulässiger Umluftanteil der Zuluft ermittelt, bei dem eine kritische Kohlendioxidkonzentration der Luft in der Fahrgastzelle 3, die beispielsweise mit 2% angenommen werden kann, vermieden wird. Hierzu wird von einer maximal zulässigen Kohlendioxidkonzentration für die Fahrgastzellenluft auf das maximal zulässige Mischungsverhältnis der vom Gebläse 17 angesaugten Zuluft zurückgerechnet, was im Folgenden anhand des in Figur 2 dargestellten Schaubilds näher erläutert wird.

Wie aus Figur 2 ersichtlich, wird der Kohlendioxidmassenstrom aus der Fahrgastzelle 3 ermittelt, indem der in Figur 1 mit einem Pfeil 12 angedeutete Leckluftstrom und ein über dem zweiten Schacht 9 der Fahrgastzelle 3 entnommener Luftstrom addiert und das Ergebnis mit einer angenommenen Kohlendioxidkonzentration in der Fahrgastzellenluft multipliziert wird. Die angenommene Kohlendioxidkonzentration in der Fahrgastzellenluft kann im einfachen Fall gleich der kritischen Kohlendioxidkonzentration angenommen werden, mit dem dieser Teil der Regelung als Zielwert arbeitet. Sie wird also nicht gemessen. In einem weiteren Schritt wird die kritische Kohlendioxidkonzentration der Fahrgastzellenluft mit der sich in der Fahrgastzelle 3 befindlichen Luftmasse multipliziert, das Ergebnis anschließend durch die Zeitdauer dT eines Regelungsschrittes dividiert und mit dem Kohlendioxidmassenstrom aus der Fahrgastzelle 3 addiert. In einem dritten Schritt wird der Kohlendioxidmassenstrom pro Insasse und Zeit mit der Anzahl der Insassen der Fahrgastzelle 3 multipliziert. Hierzu wird nachfolgend das Ergebnis aus der Multiplikation des Leckluftstromes und der Kohlendioxidkonzentration der Außenluft hinzuaddiert, um den durch die Insassen und Leckage verursachten Kohlendioxidzufluss in die Fahrgastzelle zu erhalten. Dieser wird von dem aus der Fahrgastzelle entweichenden Kohlendioxidmassenstrom abgezogen, wodurch sich der maximal zulässige Zufluss an Kohlendioxid durch die Öffnungen 21 beziehungsweise Düsen in die Fahrgastzelle 3 ergibt. Dieser wird durch den Luftmassenstrom der Zuluft geteilt, wodurch sich eine maximale Kohlendioxidkonzentration in der der Fahrgastzelle 3 zugeführten Zuluft ergibt, von der wiederum eine angenommene Kohlendioxidkonzentration der Außenluft abgezogen wird. Für einen sicheren Betrieb wird ein erhöhter Wert für die Kohlendioxidkonzentration der Außenluft gewählt, beispielsweise wie sie im Innenstadtverkehr messbar ist. Um den maximal zulässigen Umluftanteil der Zuluft zu erhalten, wird schließlich noch die Differenz zwischen der angenommenen Kohlendioxidkonzentration in der Fahrgastzellenluft von der angenommenen Kohlendioxidkonzentration der Außenluft ermittelt. Die Differenz zwischen der maximalen Kohlendioxidkonzentration in der in die Fahrgastzelle eingeblasenen Luft und der angenommenen Kohlendioxidkonzentration der Außenluft wird durch dieses Ergebnis geteilt, um den maximal zulässigen Umluftanteil der Zuluft zu erhalten, bei dem mit Sicherheit eine kritische Kohlendioxidkonzentration der Fahrgastzellenluft ausgeschlossen werden kann.

Die Anzahl der Insassen der Fahrgastzelle kann beispielsweise durch an sich bekannte Gurtschlossschalter oder eine Sitzbelegungserkennung erfasst oder im einfachsten Fall mit der maximal zulässigen Besetzung der Fahrgastzelle angenommen werden.

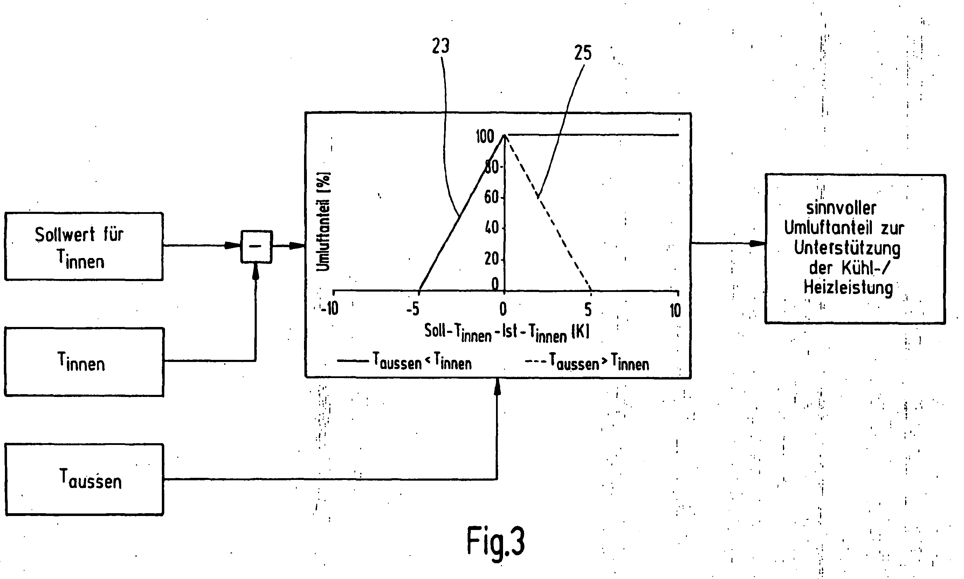

Anhand von Figur 3 wird erläutert, wie ein sinnvoller Umluftanteil der Zuluft berechnet werden kann, der die Kühl- beziehungsweise Heizleistung der Heiz- und Klimaanlage 1 unterstützt, um das Energieeinsparpotential besser zu nutzen. Wenn die Außentemperatur Tₐᵤₛₛₑₙ kleiner als die Fahrgastzellenlufttemperatur Tᵢₙₙₑₙ ist, kann sie zur Abkühlung der Fahrgastzelle 3 benutzt werden. Dies ist dann vorteilhaft, wenn der Sollwert der Fahrgastzellenlufttemperatur kleiner als der mittels eines Sensors gemessene Istwert der Fahrgastzellenlufttemperatur ist. Der Umluftanteil kann dann aus dem in Figur 3 dargestellten Diagramm in Abhängigkeit der Temperaturdifferenz zwischen der Soll-/Ist-Fahrgastzellenlufttemperatur entlang einer durchgezogenen ersten Kennlinie 23 ermittelt werden. Ist jedoch die Außentemperatur Tₐᵤₛₛₑₙ größer als die Temperatur Tᵢₙₙₑₙ der Fahrgastzellenluft, kann sie zur Aufheizung der Fahrgastzellenluft benutzt werden. Dies ist dann der Fall, wenn der Sollwert der Fahrgastzellenlufttemperatur Tᵢₙₙₑₙ größer als der gemessene Istwert der Fahrgastzellenlufttemperatur ist. Der Umluftanteil kann in diesem Fall entlang einer mit gestrichelter Linie dargestellten zweiten Kennlinie dem Diagramm entnommen werden. In beiden Fällen wird der Außenluftanteil der Zuluft kontinuierlich über die Temperaturdifferenz erhöht beziehungsweise der Umluftanteil der Zuluft verringert, wie aus dem Verlauf der Kennlinien 23 und 25 in Figur 3 ersichtlich.

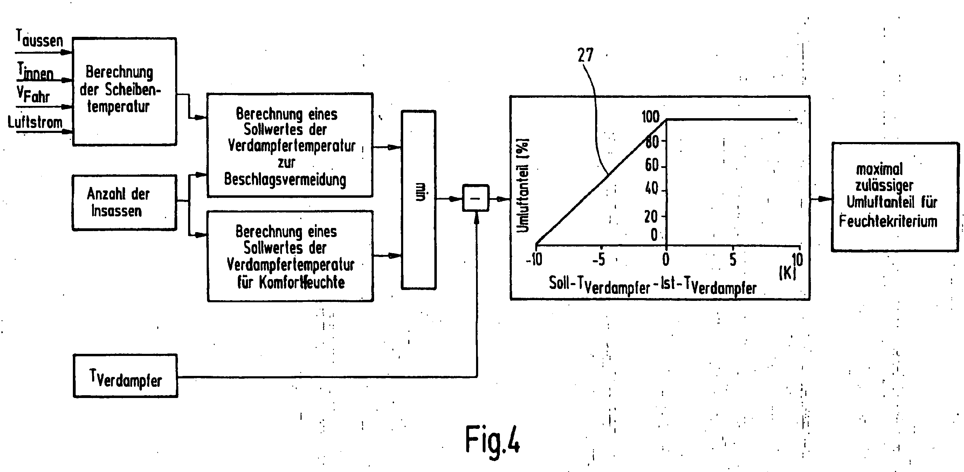

Schließlich wird ein maximal zulässiger Umluftanteil der Zuluft berechnet, um eine zu hohe Feuchte in der Fahrgastzellenluft zu vermeiden, wobei die Bewertung über einen Grenzwert der Feuchte zur Vermeidung von Scheibenbeschlag und eine unangenehme Feuchte nach "Fanger" (Behaglichkeitsfeuchte) erfolgt. Wie aus dem Schaubild gemäß Figur 4 ersichtlich, wird hierzu zunächst mit einem Scheibentemperaturmodell aus der Fahrgeschwindigkeit v_{Fahr}, der Außentemperatur Tₐᵤₛₛₑₙ, der Fahrgastzellenlufttemperatur Tᵢₙₙₑₙ, der Leistung des Gebläses 17 und der Zeit die Temperatur an der Scheibeninnenseite berechnet. Abhängig von dieser errechneten Scheibentemperatur und der Anzahl der Insassen, die durch ihre Ausdünstung zur Erhöhung der Feuchte in der Fahrgastzellenluft beitragen, wird eine erste Soll-Temperatur des Verdampfers 19 errechnet, die notwendig ist, um die Feuchte in der Fahrgastzellenluft auf einem so kleinen Niveau zu halten, dass die Fahrzeugscheiben nicht beschlagen können. Dabei wird davon ausgegangen, dass die relative Feuchte am Verdampfer 19 knapp unter 100%, insbesondere 90% bis 95%, beträgt. Das Erwärmen der Zuluft mittels der dem Verdampfer 19 nachgeordneten Heizeinrichtung auf das Niveau der Fahrgastzellenluft bewirkt dann eine Trocknung der Zuluft entsprechend dem h-x-Diagramm. Für die Berechnung der Behaglichkeitsfeuchte nimmt man einen konstanten Grenzwert für die Enthalpie der Fahrgastzellenluft an. Von dieser Enthalpie rechnet man unter Berücksichtigung von Sonneneinstrahlung und -falls vorhanden- der Schichtungsstellung sowie der Fahrgastzellenlufttemperatur auf eine einzustellende absolute Feuchte zurück, von der wieder der Einfluss der Insassen abzuziehen ist. Diese gewünschte absolute Feuchte nach Verdampfer 19 liefert eine zweite Soll-Temperatur für den Verdampfer 19.

Unter "Schichtungsstellung" wird verstanden, dass die Temperatur der Zuluft in die Fahrgastzelle über die Höhe derselben unterschiedlich ist. Üblicherweise weist dabei die dem Fußraum der Fahrgastzelle zugeführte Zuluft eine höhere Temperatur auf als die im Kopfbereich der Insassen in die Fahrgastzelle einströmende Luft.

Der kleinere der beiden berechneten ersten und zweiten Verdampfer-Soll-Temperaturen wird dann mit der tatsächlichen, mit Hilfe eines Sensors gemessenen Ist-Temperatur des Verdampfers 19 verglichen. Ist die Ist-Temperatur des Verdampfers 19 kleiner oder gleich der ermittelten Soll-Temperatur, kann für die Einstellung einer akzeptablen Feuchte der Fahrgastzellenluft ein Umluftanteil von 100% gefahren werden. Je größer die Abweichung der Ist-Temperatur des Verdampfers 19 nach oben von ihrem Sollwert ist, desto mehr muss zur Sicherheit, damit sicherer Betrieb auch bei nicht genutzter Kälteanlage sichergestellt ist, der Außenluftanteil erhöht werden.

In Figur 4 ist ein Diagramm dargestellt, in dem der Umluftanteil der Zuluft auf der Ordinatenachse und die Differenztemperatur zwischen Soll- und Ist-Temperatur des Verdampfers 19 auf der Abszissenachse aufgetragen ist. In dem Diagramm ist eine Kennlinie 27 eingezeichnet, mittels der der temperaturdifferenzabhängige Umluftanteil bestimmt werden kann. Die genaue Lage der Kennlinie 27 kann dabei mit der Außentemperatur bewertet werden, damit bei tropischen, also feuchten und heißen Verhältnissen nicht unnötig ein zu hoher Außenluftanteil der Zuluft geschaltet wird.

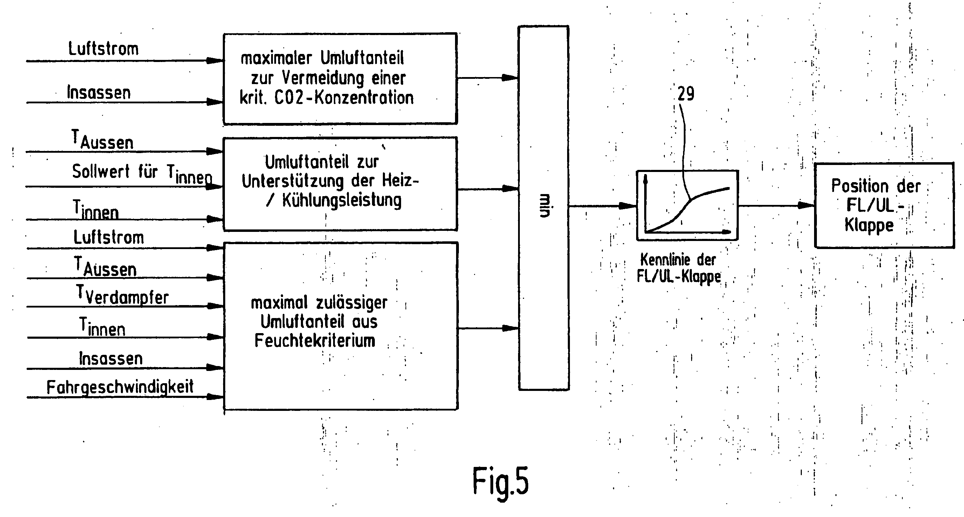

Aus Figur 5 geht eine Übersicht über die Regelstruktur zum Einstellen eines möglichst hohen Umluftanteils der Zuluft hervor, die den vorstehend ermittelten maximalen Umluftanteil der Zuluft zur Vermeidung einer kritischen Kohlendioxidkonzentration in der Fahrgastzellenluft, den sinnvollen Umluftanteil zur Unterstützung der Heiz-/Kühlleistung der Heiz-/Klimaanlage 1 sowie den maximal zulässigen Umluftanteil zur Vermeidung einer zu hohen Feuchte der Fahrgastzellenluft berücksichtigt. Der kleinste der ermittelten beziehungsweise berechneten zulässigen Umluftanteile der Zuluft wird mittels der Vorrichtung 11 eingestellt, indem bei dem anhand der Figuren beschriebenen Ausführungsbeispiel die Klappe 15 entsprechend ihrer in einem aus Figur 5 hervorgehenden Diagramm beispielhaft eingezeichneten Kennlinie 29 in eine entsprechende Stellung verschwenkt wird. Die Kennlinie 29 gibt den Durchflussanteil der Außenluft/der Umluft in der Zuluft über die Stellung der Klappe 15 wieder.

Das anhand der Figuren beschriebene Verfahren zeichnet sich dadurch aus, dass die Steuerung beziehungsweise Regelung des Umluftanteils der Zuluft in vorteilhafter Weise möglich ist, ohne dass hierzu relativ teuere Sensoren zur direkten Messung von Kohlendioxidkonzentrationen und/oder der Feuchte in der Fahrgastzellenluft benötigt werden.

Zur Berechnung des maximal zulässigen Umluftanteils, um eine kritische Konzentration von Kohlendioxid in der Fahrgastzellenluft zu vermeiden, wurde zu Beginn der anhand von Figur 2 beschriebenen Berechnung die Annahme getroffen, dass die Kohlendioxidkonzentration in der Fahrgastzelle 3 gleich groß wie die kritische Kohlendioxidkonzentration ist. Da jedoch -wie anhand von Figur 5 erläutertnicht unbedingt der maximal zulässige Umluftanteil zur Vermeidung einer kritischen Kohlendioxidkonzentration mittels der Vorrichtung 11 eingestellt wird, sondern gegebenenfalls einer der anderen ermittelten sinnvollen beziehungsweise zulässigen Umluftanteile, kann in einer weitergehenden Regelung ein Modell der Kohlendioxidkonzentration der Fahrgastzellenluft den aktuellen Wert nachbilden. Dieses Modell ist praktisch die Umkehrung des Teils der Regelung mit der Eingangsgröße "Stellung der Außenluft-Umluft-Mimik"(Klappe 15) und der Ausgangsgröße "aktuelle Kohlendioxidkonzentration in der Fahrgastzellenluft", wie es anhand der Figur 2 beschrieben wurde. Es wird also anstelle des maximal zulässigen Umluftanteils der tatsächlich eingestellte Umluftanteil eingesetzt und die anhand der Figur 2 beschriebene Berechnung umgekehrt.

Die Einstellung des gewünschten Umluftanteils und vorzugsweise auch die vorstehend beschriebenen Berechnungen beziehungsweise Ermittlungsschritte werden bei einer vorteilhaften Ausführungsform mittels der Steuer-/Regeleinrichtung der Heiz- und/oder Klimaanlage durchgeführt. Selbstverständlich kann für die Berechnungen auch ein anderer, gegebenenfalls bereits vorhandener Rechner verwendet werden.

Zusammenfassend bleibt festzuhalten, dass zur Ermittlung der maximal zulässigen Umluftanteile (Figuren 2 und 4) und des sinnvollen Umluftanteils (Figur 3) jeweils mehrere Hilfsparameter herangezogen wurden, die teilweise mit Hilfe von im Fahrzeug ohnehin vorhandenen Sensoren gemessen oder durch Annahmen beziehungsweise Erfahrungswerte angenommen, das heißt festgelegt wurden.

Die Vorteile, die sich mit dem erfindungsgemäßen Verfahren ergeben, stellen sich selbstverständlich auch dann ein, wenn anstelle von drei Umluftanteilen, wie anhand der Figuren 2 bis 5 beschrieben, beispielsweise nur einer der maximal zulässigen Umluftanteile ermittelt und eingestellt wird.

## Patentansprüche

1. Verfahren zum Einstellen eines Umluftanteils der einer Fahrgastzelle eines Fahrzeugs zugeführten Zuluft zum Zwecke der Vermeidung des Überschreitens eines vorgegebenen Grenzwertes mindestens eines Luftparameters, insbesondere des Kohlendioxid-Anteils und/oder der Feuchte in der Fahrgastzellenluft, wobei zur indirekten Erfassung des Luftparameters Hilfsparameter ermittelt und ausgewertet werden und dass in Abhängigkeit des Auswerteergebnisses der Umluftanteil eingestellt wird, wobei ein erster Hilfsparameter ein vorgegebener, insbesondere der maximal zulässige, Grenzwert des Umluftanteils zur Vermeidung einer kritischen Kohlendioxidkonzentration in der Fahrgastzelle ist, wobei ein weiterer Hilfsparameter der Eintrag von Kohlendioxid in die Fahrgastzelle durch die Atmung mindestens eines Insassen ist, wobei ein weiterer Hilfsparameter die Anzahl der Insassen der Fahrgastzelle ist, **dadurch gekennzeichnet dass** ein weiterer Hilfsparameter ein vorgegebener, insbesondere der maximal zulässige, Grenzwert des Umluftanteils zur Vermeidung einer zu hohen Feuchte der Fahrgastzellenluft ist und der Grenzwert so gewählt wird, dass Scheibenbeschlag und vorzugsweise eine ermittelte unangenehme Feuchte/Behaglichkeitsfeuchte vermieden werden.

2. Verfahren nach einem der vorhergehenden Ansprüche 1, **dadurch gekennzeichnet, dass** ein weiterer Hilfsparameter der Abfluss von Kohlendioxid aus der Fahrgastzelle ist.

3. Verfahren nach einem der vorhergehenden Ansprüche, **dadurch gekennzeichnet, dass** ein weiterer Hilfsparameter der Eintrag von Kohlendioxid in die Fahrgastzelle durch eine -vorzugsweise angenommene-Undichtigkeit derselben ist.

4. Verfahren nach einem der Ansprüche 1 bis 3, **dadurch gekennzeichnet, dass** die Anzahl der Insassen mittels mindestens eines Sensors, insbesondere Gurtschlossschalter oder Sitzbelegungserkennung, ermittelt oder mit der maximal zulässigen Besetzung der Fahrgastzelle angenommen wird.

5. Verfahren nach einem der vorhergehenden Ansprüche, **dadurch gekennzeichnet, dass** ein weiterer Hilfsparameter die Kohlendioxid-Konzentration in der Außenluft ist

6. Verfahren nach Anspruch 5, **dadurch gekennzeichnet, dass** für die Kohlendioxid-Konzentration in der Außenluft ein -vorzugsweise konstanter- Grenzwert angenommen wird, der vorzugsweise gleich groß wie eine im Innenstadtverkehr messbare Kohlendioxid-Konzentration ist.

7. Verfahren nach einem der vorhergehenden Ansprüche, **dadurch gekennzeichnet, dass** das maximal zulässige Mischungsverhältnis von Umluft und Außenluft in der Zuluft zur Vermeidung des Überschreitens der kritischen Kohlendioxidkonzentration in der Fahrgastzelle in Abhängigkeit von mehreren der Hilfsparameter, vorzugsweise von allen sechs Hilfsparameter ermittelt wird.

8. Verfahren nach einem der vorhergehenden Ansprüche, **dadurch gekennzeichnet, dass** ein weiterer siebenter Hilfsparameter die IST-Lufttemperatur in der Fahrgastzelle und ein weiterer achter Hilfsparameter die Außenlufttemperatur ist.

9. Verfahren nach Anspruch 11, **dadurch gekennzeichnet, dass** in Abhängigkeit der siebten und achten Hilfsparameter sowie einer gewünschten, den neunten Hilfsparameter bildenden SOLL-Lufttemperatur ein sinnvoller Umluftanteil zur Optimierung des Energieverbrauchs einer Kühl-/Heizeinrichtung ermittelt wird.

10. Verfahren nach einem der vorhergehenden Ansprüche, **dadurch gekennzeichnet, dass** ein weiterer zehnter Hilfsparameter die Temperatur an der Innenseite mindestens einer Scheibe des Fahrzeugs ist.

11. Verfahren nach Anspruch 10, **dadurch gekennzeichnet, dass** die Scheibeninnenseitentemperatur mittels eines Scheibentemperaturmodells aus der Fahrgeschwindigkeit, der Außenlufttemperatur, der Fahrgastzellenlufttemperatur, der Leistung eines Gebläses der Heiz-/Kühleinrichtung und der Zeit ermittelt, vorzugsweise berechnet wird.

12. Verfahren nach einem der vorhergehenden Ansprüche, **dadurch gekennzeichnet, dass** in Abhängigkeit der ermittelten Temperatur an der Scheibeninnenseite und der Anzahl der sich in der Fahrgastzelle befindlichen Insassen eine erste SOLL-Temperatur eines Verdampfers der Heiz-/Kühleinrichtung ermittelt, vorzugsweise berechnet, wird, bei der die Feuchte der Fahrgastzellenluft auf einem solchen Niveau gehalten wird, dass die Scheiben des Fahrzeugs beschlagsfrei sind.

13. Verfahren nach einem der vorhergehenden Ansprüche, **dadurch gekennzeichnet, dass** zur Ermittlung der Behaglichkeitsfeuchte ein konstanter Wert für die Enthalpie der Fahrgastzellenluft angenommen und von dieser Enthalpie unter Berücksichtigung der Sonneneinstrahlung und gegebenenfalls einer Schichtungsstellung sowie der Lufttemperatur in der Fahrgastzelle eine einzustellende, absolute Feuchte der Zuluft nach Verdampfer berechnet werden, von der vorzugsweise der Einfluss der Insassen abgezogen wird.

14. Verfahren nach Anspruch 13, **dadurch gekennzeichnet, dass** aus der gewünschten absoluten Feuchte der Zuluft nach Verdampfer ein zweiter SOLL-Temperatur des Verdampfers ermittelt wird, wobei die kleinere Temperatur der ersten und zweiten SOLL-Temperaturen des Verdampfers mit der gemessenen IST-Temperatur des Verdampfers verglichen und wobei der Umluftanteil in Abhängigkeit dieser Temperaturdifferenz werden.

15. Verfahren nach Anspruch 14, **dadurch gekennzeichnet, dass** ein Umluftanteil in der Zuluft von bis zu 100 % eingestellt werden kann, ohne dass die Feuchte in der Fahrgastzellenluft ein kritisches Niveau erreicht, wenn die IST-Temperatur des Verdampfers kleiner als oder gleich groß wie die ermittelte, kleinere SOLL-Temperatur des Verdampfers ist.

16. Verfahren nach Anspruch 14, **dadurch gekennzeichnet, dass** je größer die Abweichung der IST-Temperatur des Verdampfers nach oben gegenüber dem ermittelten, kleineren der beiden SOLL-Temperaturen des Verdampfers ist, desto kleiner wird der Umluftanteil in der Zuluft eingestellt.

17. Verfahren nach einem der vorhergehenden Ansprüche, **dadurch gekennzeichnet, dass** von den ermittelten zulässigen Umluftanteilen zur Vermeidung einer kritischen Kohlendioxidkonzentration in der Fahrgastzellenluft und des Überschreitens des vorgegebenen Grenzwertes der Feuchte der Fahrgastzellenluft sowie gegebenenfalls dem sinnvollen Umluftanteil zur Unterstützung der Heiz-/Kühlleistung der kleinste Umluftanteil in der der Fahrgastzelle zugeführten Zuluft eingestellt wird.

18. Heiz- und/oder Klimaanlage (1) für ein Fahrzeug mit einer Vorrichtung (11) zur Einstellung des Umluftanteils der einer Fahrgastzelle (3) des Fahrzeugs zugeführten Zuluft, wobei die Vorrichtung (11) mittels einer Steuereinrichtung gemäß einem Verfahren nach mindestens einem der Ansprüche 1 bis 17 gesteuert/geregelt wird.

## Claims

1. Method for adjusting the fraction of recirculated air in the incoming air delivered to a passenger compartment of a vehicle for the purpose of avoiding the exceeding of a specified limit value of at least one air parameter, in particular the carbon dioxide fraction and/or the humidity in the passenger compartment air, such that for the indirect determination of the said air parameter secondary parameters are determined and evaluated, and depending on the result of the evaluation the recirculated air fraction is adjusted, a first secondary parameter being a specified, in particular the maximum admissible limit value of the recirculated air fraction to avoid a critical carbon dioxide concentration in the passenger compartment, another secondary parameter being the input of carbon dioxide into the passenger compartment due to the respiration of at least one occupant and another secondary parameter being the number of occupants in the passenger compartment,
**characterised in that** a further secondary parameter is a specified, in particular the maximum admissible limit value of the recirculated air fraction for avoiding too high a humidity of the passenger compartment air, the said limit being chosen so that misting up of the windows and preferably a determined unpleasant humidity level / comfort humidity index are avoided.

2. Method according to Claim 1, **characterised in that** another secondary parameter is the outflow of carbon dioxide from the passenger compartment.

3. Method according to either of the preceding claims, **characterised in that** another secondary parameter is the input of carbon dioxide into the passenger compartment due to - preferably presumed - leakage thereof.

4. Method according to any of Claims 1 to 3, **characterised in that** the number of occupants is detected by means of at least one sensor, in particular seat-belt lock switches or seat occupancy recognition sensors, or is assumed to be equal to the maximum admissible occupancy of the passenger compartment.

5. Method according to any of the preceding claims, **characterised in that** another secondary parameter is the carbon dioxide concentration in the outside air.

6. Method according to Claim 5, **characterised in that** the carbon dioxide concentration in the outside air is assumed to be a - preferably constant - limit value which is preferably equal to a carbon dioxide concentration that can be measured in inner-city traffic.

7. Method according to any of the preceding claims, **characterised in that** the maximum admissible mixing ratio of recirculated air and outside air in order to avoid exceeding the critical maximum carbon dioxide concentration in the passenger compartment is determined as a function of a plurality of secondary parameters, preferably all six secondary parameters.

8. Method according to any of the preceding claims, **characterised in that** a further, seventh secondary parameter is the ACTUAL air temperature in the passenger compartment, and a further, eighth secondary parameter is the temperature of the outside air.

9. Method according to Claim 1, **characterised in that** a suitable recirculated air fraction for optimising the energy consumption of a cooling / heating device is determined as a function of the said seventh and eighth secondary parameters together with a desired NOMINAL, air temperature which forms the ninth secondary parameter.

10. Method according to any of the preceding claims, **characterised in that** a further, tenth secondary parameter is the temperature on the inside of at least one window of the vehicle.

11. Method according to Claim 10, **characterised in that** the inside temperature of the window is determined, preferably calculated, on the basis of a window temperature model that takes into account the driving speed, the outside air temperature, the passenger compartment air temperature, the power of a fan of the heating / cooling device and the time.

12. Method according to any of the preceding claims, **characterised in that** as a function of the temperature detected on the inside of one window and of the number of occupants present in the passenger compartment, a first NOMINAL temperature of an evaporator of the heating / cooling device is determined, preferably calculated, at which the humidity of the passenger compartment air is kept at a level such that the windows of the vehicle do not mist up.

13. Method according to any of the preceding claims, **characterised in that** to determine the humidity comfort index a constant value is assumed for the enthalpy of the passenger compartment air and from this enthalpy, taking into account the insolation and necessary any stratification and the passenger compartment air temperature, an absolute humidity of the incoming air downstream from the evaporator to be set is calculated, from which the influence of the occupants is preferably subtracted.

14. Method according to Claim 13, **characterised in that** from the desired absolute humidity value of the incoming air downstream from the evaporator a second NOMINAL evaporator temperature is determined, the lower of the said two NOMINAL evaporator temperatures is then compared with the measured ACTUAL evaporator temperature, and the recirculated air fraction is determined as a function of the temperature difference.

15. Method according to Claim 14, **characterised in that** a recirculated air fraction in the incoming air of up to 100% can be set without the humidity in the passenger compartment air reaching a critical level, when the ACTUAL temperature of the evaporator is lower than or equal to the lower NOMINAL evaporator temperature determined.

16. Method according to Claim 14, **characterised in that** the larger the upward deviation of the ACTUAL evaporator temperature compared with the determined, lower of the two NOMINAL evaporator temperatures, the smaller the recirculated air fraction in the incoming air is set.

17. Method according to any of the preceding claims, **characterised in that** of the recirculated air fractions determined as admissible for avoiding a critical carbon dioxide concentration and for not exceeding the specified limit value of the humidity in the passenger compartment air, and if necessary the appropriate recirculated air fraction for assisting the heating / cooling power, the smallest recirculated air fraction is set in the incoming air admitted to the passenger compartment.

18. Heating and/or air-conditioning system (1) for a vehicle, having a device (11) for adjusting the recirculated air fraction in the incoming air delivered to a passenger compartment (3), the said device (11) being controlled/regulated in accordance with a method as described in at least one of Claims 1 to 17.

## Revendications

1. Procédé permettant d'ajuster une proportion d'air de circulation par rapport à l'air soufflé fourni à l'habitacle d'un véhicule, afin d'éviter le dépassement d'une valeur limite supérieure prédéfinie d'au moins un paramètre d'air, en particulier le dépassement de la proportion de dioxyde de carbone et / ou de l'humidité contenue dans l'air de l'habitacle, où, pour la saisie indirecte du paramètre d'air, on détermine et on analyse des paramètres auxiliaires, et que la proportion d'air de circulation est ajustée en fonction du résultat de l'analyse, où un premier paramètre auxiliaire est une valeur limite prédéfinie - en particulier la valeur limite maximale admissible - de la proportion d'air de circulation, pour éviter une concentration critique en dioxyde de carbone dans l'habitacle, où un autre paramètre auxiliaire est l'entrée de dioxyde de carbone dans l'habitacle, provoquée par la respiration d'au moins un occupant, où un autre paramètre auxiliaire est le nombre d'occupants de l'habitacle du véhicule,
**caractérisé en ce qu'**un autre paramètre auxiliaire est une valeur limite prédéfinie - en particulier la valeur limite maximale admissible - de la proportion d'air de circulation, pour éviter une humidité trop élevée de l'air de l'habitacle, et la valeur limite est sélectionnée de manière telle, que l'embuage des vitres et, de préférence, une humidité / humidité de confort désagréable ayant été déterminée, soient évités.

2. Procédé selon la revendication 1, **caractérisé en ce qu'**un autre paramètre auxiliaire est l'évacuation de dioxyde de carbone sortant de l'habitacle.

3. Procédé selon l'une ou l'autre des revendications précédentes, **caractérisé en ce qu'**un autre paramètre auxiliaire est l'entrée de dioxyde de carbone dans l'habitacle, due à un défaut d'étanchéité - de préférence supposé - de ce même habitacle.

4. Procédé selon l'une quelconque des revendications 1 à 3, **caractérisé en ce que** le nombre d'occupants est déterminé au moyen d'au moins un capteur, en particulier d'un contacteur d'attache de ceinture ou par la détection d'occupation des sièges, ou bien est supposé d'après l'occupation maximale admissible de l'habitacle.

5. Procédé selon l'une quelconque des revendications précédentes, **caractérisé en ce qu'**un autre paramètre auxiliaire est la concentration en dioxyde de carbone dans l'air extérieur.

6. Procédé selon la revendication 5, **caractérisé en ce que**, pour la concentration en dioxyde de carbone dans l'air extérieur, on prend comme hypothèse une valeur limite, de préférence constante, qui, de préférence, est de même importance qu'une concentration en dioxyde de carbone pouvant être mesurée dans le trafic en ville.

7. Procédé selon l'une quelconque des revendications précédentes, **caractérisé en ce que** le rapport de mélange maximum admissible d'air de circulation et d'air extérieur, dans l'air soufflé, pour éviter le dépassement de la limite supérieure de la concentration critique en dioxyde de carbone, dans l'habitacle, est déterminé en fonction de plusieurs paramètres auxiliaires, de préférence en fonction de la totalité des six paramètres auxiliaires.

8. Procédé selon l'une quelconque des revendications précédentes, **caractérisé en ce qu'**un septième autre paramètre auxiliaire est la température de l'air RÉELLE dans l'habitacle, et un huitième autre paramètre auxiliaire est la température de l'air extérieur.

9. Procédé selon la revendication 8, **caractérisé en ce que** l'on détermine une proportion d'air de circulation utile, permettant l'optimisation de la consommation en énergie d'un système de refroidissement / de chauffage, en fonction des septième et huitième paramètres auxiliaires, ainsi qu'en fonction d'une température de l'air THÉORIQUE souhaitée constituant le neuvième paramètre auxiliaire.

10. Procédé selon l'une quelconque des revendications précédentes, **caractérisé en ce qu'**un dixième autre paramètre auxiliaire est la température à l'intérieur, au moins d'une vitre du véhicule.

11. Procédé selon la revendication 10, **caractérisé en ce que** la température intérieure de la vitre est déterminée, de préférence calculée, au moyen d'un modèle de température de vitre, d'après la vitesse de roulage, la température de l'air extérieur, la température de l'air dans l'habitacle, d'après la puissance d'un ventilateur du dispositif de chauffage / de refroidissement et d'après le temps écoulé.

12. Procédé selon l'une quelconque des revendications précédentes, **caractérisé en ce qu'**une première température THÉORIQUE d'un évaporateur du dispositif de chauffage / de refroidissement est déterminée, de préférence calculée, en fonction de la température déterminée sur le côté intérieur de la vitre et en fonction du nombre d'occupants se trouvant dans l'habitacle, première température théorique dans le cas de laquelle l'humidité contenue dans l'air de l'habitacle doit être maintenue à un niveau tel, que les vitres du véhicule soient exemptes de buée.

13. Procédé selon l'une quelconque des revendications précédentes, **caractérisé en ce que**, pour la détermination de l'humidité de confort, on prend comme hypothèse une valeur constante pour l'enthalpie de l'air de l'habitacle et, à partir de cette enthalpie, en tenant compte de l'ensoleillement et, le cas échéant, d'une position de répartition ainsi que de la température de l'air dans l'habitacle, on calcule une humidité absolue - devant être ajustée - de l'air soufflé en aval de l'évaporateur, humidité absolue de laquelle on déduit, de préférence, l'influence des occupants.

14. Procédé selon la revendication 13, **caractérisé en ce que** l'on détermine une deuxième température THÉORIQUE de l'évaporateur, d'après l'humidité absolue - souhaitée - de l'air soufflé en aval de l'évaporateur, où la température la plus faible des deux première et deuxième températures THÉORIQUES de l'évaporateur est comparée à la température RÉELLE mesurée et où la proportion d'air de circulation est en fonction de cette différence de température.

15. Procédé selon la revendication 14, **caractérisé en ce qu'**une proportion d'air de circulation, dans l'air soufflé, peut être ajustée jusqu'à 100 %, sans que l'humidité contenue dans l'air de l'habitacle atteigne un niveau critique, lorsque la température RÉELLE de l'évaporateur est inférieure ou égale à la température THÉORIQUE de l'évaporateur, la plus faible, ayant été déterminée.

16. Procédé selon la revendication 14, **caractérisé en ce que** plus l'écart de la température RÉELLE de l'évaporateur, vers le haut, est important par rapport à la plus faible des deux températures THÉORIQUES de l'évaporateur ayant été déterminées, plus la proportion d'air de circulation, ajustée dans l'air soufflé, est faible.

17. Procédé selon l'une quelconque des revendications précédentes, **caractérisé en ce que** la plus faible proportion d'air de circulation, dans l'air soufflé fourni à l'habitacle, est ajustée à partir des proportions d'air de circulation admissibles ayant été déterminées, pour éviter une concentration critique en dioxyde de carbone dans l'air de l'habitacle et pour éviter le dépassement de la valeur limite supérieure prédéfinie de l'humidité de l'air contenue dans l'air de l'habitacle, ainsi que, le cas échéant, à partir de la proportion d'air de circulation utile favorisant la puissance de chauffage / de refroidissement.

18. Système de chauffage et / ou de climatisation (1) pour un véhicule, comprenant un dispositif (11) permettant d'ajuster la proportion d'air de circulation par rapport à l'air soufflé fourni à l'habitacle (3) d'un véhicule, où le dispositif (11) est commandé / réglé au moyen d'un dispositif de commande conformément à un procédé selon au moins l'une quelconque des revendications 1 à 17.
